# FASCICULE DE BREVET EUROPEEN

(11) **EP 2 720 933 B1**
(45) Date de publication et mention de la délivrance du brevet: **10.08.2016**
(21) Numéro de dépôt: 12729055.9
(22) Date de dépôt: 04.06.2012
(51) Int. Cl.: B62K 3/00

(54) **GYROPODE "HUBLESS" DE STRUCTURE SIMPLIFIEE**
VEREINFACHTES IN BALANCE EINPERSONEN-TRANSPORTMITTEL MIT NUR ZWEI AUF DERSELBEN WELLENLOSER ACHSE LIEGENDEN RÄDERN
SIMPLIFIED TWO WHEELED HUBLESS SELF-BALANCING PERSONAL TRANSPORT VEHICLE

(30) Priorité: 17.06.2011 FR 1155334
(43) Date de publication de la demande: 23.04.2014
(73) Titulaire: Université Paris-Sud 11, 91405 Orsay Cedex (FR)
(72) Inventeur: MARTINELLI, Pascal, Marie, Christian, Yves, F-94110 Arcueil (FR); WILLIAMS, Alexis, Louis, F-78330 Fontenay Le Fleury (FR); LARIVE, Olivier, François, F-94880 Noiseau (FR); COIBION, Nicolas, René, F-77515 Faremoutiers (FR)
(74) Mandataire: Parzy, Benjamin Alain
(86) Numéro de dépôt international: PCT/EP2012/060478
(87) Numéro de publication internationale: WO 2012/171821

(56) Documents cités:
- EP-A1- 2 213 564
- WO-A1-2007/128124
- US-A- 6 079 724
- US-A1- 2011 067 937
- US-S1- D 551 592

## Description

L'invention est relative à un gyropode, ou transporteur personnel, très simple à fabriquer.

### ARRIERE PLAN DE L'INVENTION

Le plus connu de ces gyropodes est commercialisé sous la marque « segway ». Un tel gyropode comporte une plateforme sur laquelle l'utilisateur se tient debout. La plateforme est équipée de deux roues encadrant celle-ci latéralement. Le gyropode est équipé d'un manche de maintien et de conduite, ainsi que d'un dispositif de stabilisation gyroscopique agissant sur des moteurs d'entraînement des roues.

Ces gyropodes comportent un nombre important de pièces et sont onéreux à produire. En particulier, les roues sont chacune montées sur l'arbre de sortie d'un réducteur rapporté sur la plateforme et dont l'arbre d'entrée est entraîné par le moteur d'entraînement associé. Cette disposition est complexe et coûteuse à produire. Le document EP 2 213 564 A1 décrit un véhicule similaire en accord avec le préambule de la revendication 1.

Plus récemment, il a été proposé un gyropode plus simple de conception, commercialisé sous le nom « ewee ». Celui-ci dispose d'un corps central élancé formant le manche, et portant à son extrémité inférieure deux roues. Le corps comporte des demi-plateformes s'étendant de part et d'autre du corps, au-delà des roues, pour recevoir les pieds de l'utilisateur.

Cette disposition paraît moins ergonomique puisque la disposition écartée des demi-plateformes impose un écartement des pieds de l'utilisateur et conduit à un engin d'encombrement transversal augmenté.

### OBJET DE L'INVENTION

L'invention a pour objet un gyropode à plateforme centrale, de conception simplifiée

### RESUME DE L'INVENTION

En vue de la réalisation de ce but, on propose un Gyropode comportant une plateforme flanquée de deux roues et munie d'un manche de maintien et de conduite ainsi que d'un dispositif de stabilisation gyroscopique agissant sur des moteurs d'entraînement des roues. Selon l'invention, chacune des roues comporte une jante qui coopère avec des paliers portés par des supports respectifs en forme de croissant qui s'étendent chacun essentiellement en regard de la jante associée et qui portent le moteur d'entraînement associé de sorte que celui-ci entraîne la roue associée en agissant sur la jante, les supports étant fixés sur les côtés de la plateforme.

Ainsi, chaque moteur d'entraînement peut coopérer directement (par friction ou par engrènement) avec la jante de la roue associée, ce qui offre naturellement un grand rapport de réduction permettant d'économiser le réducteur.

Selon un mode préféré de réalisation, chacun des moteurs comporte un arbre muni d'un galet venant coopérer avec une zone annulaire de la jante de sorte que le poids supporté par la plateforme est transmis aux roues via les galets.

Ainsi, le galet peut coopérer avec une bande de roulement interne rapportée sur la zone annulaire de la jante, de sorte que la roue est entraînée en rotation via le frottement entre cette bande de roulement et le galet. Le poids de la plateforme passant essentiellement par les galets, on assure ainsi la transmission de la puissance du moteur vers et les roues.

De préférence, la plateforme comporte un marchepied porté par des traverses qui s'étendent entre les supports en étant fixées à ces derniers. Cette disposition est très simple à produire et à assembler, et se révèle en outre très rigide. En outre, cette disposition permet d'abaisser le centre de gravité du gyropode.

### BREVE DESCRIPTION DES DESSINS

L'invention sera mieux comprise à la lumière de la description qui suit d'un mode particulier de réalisation non limitatif de l'invention, en référence aux figures des dessins annexés parmi lesquels :
- la figure 1 est une vue éclatée d'un gyropode selon l'invention ;
- la figure 2 est une vue en perspective du gyropode de la figure 1, montrant le dessous de celui-ci ;
- la figure 3 est une vue en coupe de l'une des roues, au niveau d'un des paliers du support associé.

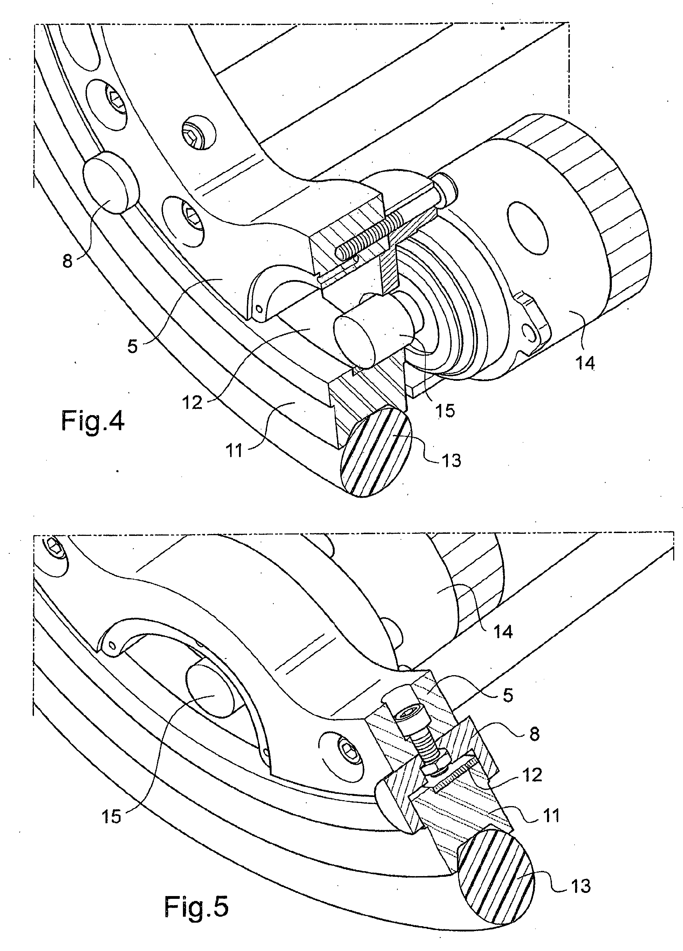

- La figure 4 est une vue en perspective avec coupe partielle d'une roue au niveau du galet de friction ;
- La figure 5 est une vue en perspective avec coupe partielle d'une roue au niveau de l'un des paliers.

### DESCRIPTION DETAILLEE DE L'INVENTION

En référence aux figures, le gyropode de l'invention comporte une plateforme 1 comportant un marchepied 2. Le marchepied 2 vient reposer sur une structure comportant deux traverses postérieures 3 et deux traverses antérieures 4 qui s'étendent entre des supports 5 en forme de croissant en étant fixées par leurs extrémités (par exemple par emmanchement à ces derniers). Les traverses postérieures 3 portent un ancrage 6 adapté à recevoir un manche 7 de maintien et de pilotage terminé par une poignée 8. L'ensemble formé par les traverses 3,4 et les supports 5 forme une structure rigide. En particulier, l'ancrage 6 peut être prévu pour être serré sur les deux traverses postérieures 3, ce qui limite fortement le vrillage de la structure.

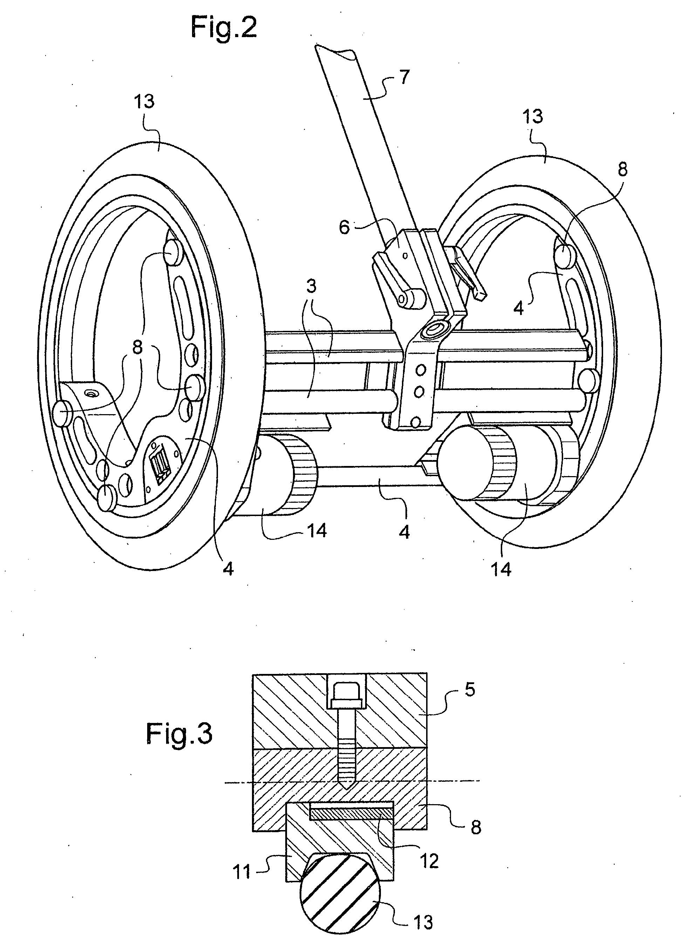

Les roues 10 comportent chacune une jante 11 portant extérieurement un organe de roulement 13 (par exemple un pneumatique ou un boudin plein en élastomère) et portent intérieurement une bande de roulement 12 (par exemple une bande élastomère) qui est ici reçue dans un chemin interne de la jante, comme illustré à la figure 3.

Chacune des roues 10 est rapportée sur le support 5 correspondant de façon que la bande de roulement 12 s'étende en regard d'une face externe du support 5. Celui-ci est en forme générale de croissant et porte quatre paliers, ici des paliers lisses 8 qui s'étendent en saillie de la face externe du support 5 associé pour ici coopérer avec la face interne de la jante et ses côtés pour la guider en rotation sur le support 5. Les paliers peuvent par exemple être réalisés en polyamide.

Comme cela est plus particulièrement visible à la figure 3, les paliers lisses 8 sont ici de forme générale cylindrique, et ont une face avant découpée pour former un cavalier venant chevaucher la face interne de la jante 11, et une face arrière semi-cylindrique apte à être reçue dans un des logements 9 homologues du support 5.

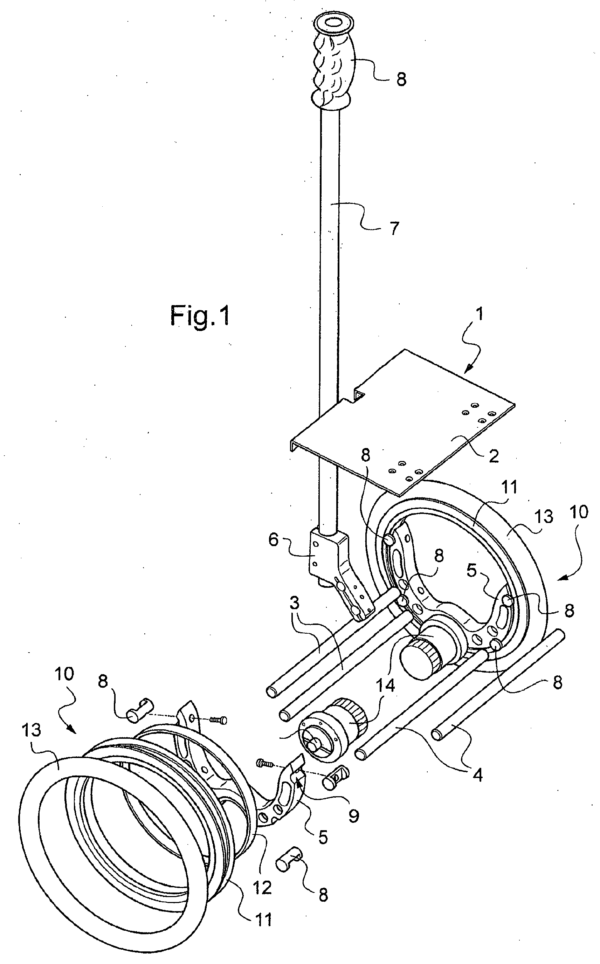

Pour monter la roue 10 sur le support 5 associé, il suffit de présenter les paliers 8 sur la face interne de la jante 11, de glisser le support 5 à l'intérieur de la roue selon une direction axiale de celle-ci de sorte que les quatre paliers 8 pénètrent dans leurs logements 9. Les paliers 8 sont ensuite fixés sur le support 5 au moyen de vis, comme illustré à la figure 1.

L'entraînement des roues en rotation se fait par des moteurs 14 portés par les supports 5. Les moteurs 14 comportent chacun un arbre de sortie qui porte un galet 15 coopérant directement par friction avec la bande de roulement 12. Le rapport de réduction est naturellement important, ce qui évite tout recours à un réducteur.

L'essentiel du poids de la plateforme 1 et du passager est transmis aux roues 10 par les galets 15, assurant ainsi un appui de ces derniers contre la bande de roulement 12 propre à garantir une bonne transmission de la puissance du moteur. Ainsi, toute la charge radiale est transmise par les moteurs aux roues, sans utilisation d'un dispositif de mise en pression du galet sur la jante.

Enfin, bien que cela ne soit pas représenté, le gyropode comporte une électronique de gestion des moteurs et de stabilisation du gyropode (de préférence disposée entre les moteurs), ainsi qu'un pack de batterie (de préférence disposée au niveau de traverses antérieures 4).

L'ensemble ainsi formé est très simple et comporte un nombre réduit de pièces. Les seules pièces un tant soit peu complexes (au moins de forme) sont les supports 5. L'invention est ainsi tout à fait adaptée à la réalisation de gyropodes d'intérieur bon marché.

L'invention n'est pas limitée à ce qui vient d'être décrit, mais englobe au contraire toute variante entrant dans le cadre défini par les revendications. En particulier, bien que les paliers soient ici des paliers lisses, ils pourront être de tout autre type, par exemple des paliers roulants.

Bien qu'ici les moteurs comportent un galet de friction coopérant directement avec la bande de roulement 12, on pourra envisager tout autre mode d'entraînement, par exemple un pignon fixé en extrémité de l'arbre du moteur coopérant avec une roue dentée portée par la roue. Il faudra alors prévoir un organe de transmission du poids de la plateforme et de l'utilisateur vers les roues par exemple un simple galet roulant sur la jante et coaxial au pignon.

En outre, bien que le dispositif de stabilisation gyroscopique soit porté sous le marchepied, il pourra être intégré dans le manche 7, ou encore dans les supports 5.

## Revendications

1. Gyropode comportant une plateforme (1) flanquée de deux roues (10) et munie d'un manche de maintien et de conduite (7) ainsi que d'un dispositif de stabilisation gyroscopique agissant sur des moteurs (14) d'entraînement des roues, **caractérisé en ce que** chacune des roues comporte une jante (12) qui coopère avec des paliers (8) portés par des supports (5) respectifs en forme de croissant qui s'étendent chacun essentiellement en regard de la jante associée et qui portent le moteur d'entraînement associé de sorte que celui-ci entraîne la roue correspondante en agissant sur la jante, les supports étant fixés sur les côtés de la plateforme.

2. Gyropode selon la revendication 1, dans lequel la plateforme comporte un marchepied (2) porté par des traverses (3,4) qui s'étendent entre les supports (5) en étant fixées à ces derniers.

3. Gyropode selon la revendication 1, dans lequel chaque moteur d'entraînement entraîne la roue associée par l'intermédiaire d'un galet à friction (15) coopérant avec une bande de roulement (12) rapportée sur la jante de la roue.

4. Gyropode selon la revendication 3, dans lequel le poids de la plateforme et de l'utilisateur est transféré aux roues essentiellement par les galets de friction (15) des moteurs.

5. Gyropode selon la revendication 1, dans lequel les paliers (8) de guidage des jantes sont des paliers lisses.

## Patentansprüche

1. Selbstbalancierendes Einpersonen-Transportmittel, umfassend eine Plattform (1), die von zwei Rädern (10) flankiert und mit einer Halte- und Lenkstange (7) sowie mit einer gyroskopischen Stabilisierungsvorrichtung versehen ist, die auf Antriebsmotoren (14) zum Antrieb der Räder einwirkt, **dadurch gekennzeichnet, dass** jedes der Räder eine Felge (12) umfasst, die mit Lagern (8) zusammenwirkt, die von jeweiligen sichelförmigen Trägern (5) getragen werden, die sich jeweils im Wesentlichen gegenüber der dazugehörigen Felge erstrecken und den dazugehörigen Antriebsmotor derart tragen, dass dieser das entsprechende Rad antreibt, indem er auf die Felge einwirkt, wobei die Träger an den Seiten der Plattform befestigt sind.

2. Selbstbalancierendes Einpersonen-Transportmittel nach Anspruch 1, wobei die Plattform ein Trittbrett (2) umfasst, das von Querträgern (3, 4) getragen wird, die sich zwischen den Trägern (5) erstrecken und dabei an diesen letztgenannten befestigt sind.

3. Selbstbalancierendes Einpersonen-Transportmittel nach Anspruch 1, wobei jeder Antriebsmotor das dazugehörige Rad über eine Reibrolle (15) antreibt, die mit einer Lauffläche (12) zusammenwirkt, die an der Felge des Rades angebracht ist.

4. Selbstbalancierendes Einpersonen-Transportmittel nach Anspruch 3, wobei das Gewicht der Plattform und der Benutzer im Wesentlichen durch Reibrollen (15) der Motoren auf die Räder übertragen wird.

5. Selbstbalancierendes Einpersonen-Transportmittel nach Anspruch 1, wobei die Lager (8) zur Führung der Felgen Gleitlager sind.

## Claims

1. A self-balancing human transporter comprising a platform (1) flanked by two wheels (10) and equipped with a handle (7) for holding and steering, and with a gyroscopic stabilizing device acting on motors (14) that drive the wheels, **characterized in that** each of the wheels comprises a rim (12) which collaborates with bearings (8) borne by respective crescent-shaped supports (5) which each extend essentially facing the associated rim and which bear the associated drive motor such that this motor drives the corresponding wheel by acting on the rim, the supports being fixed to the sides of the platform.

2. The self-balancing human transporter as claimed in claim 1, in which the platform comprises a footplate (2) borne by crossmembers (3, 4) which extend between the supports (5) being fixed thereto.

3. The self-balancing human transporter as claimed in claim 1, in which each drive motor drives the associated wheel via a friction roller (15) collaborating with a runway (12) attached to the rim of the wheel.

4. The self-balancing human transporter as claimed in claim 3, in which the weight of the platform and of the user is transferred to the wheels essentially via the friction rollers (15) of the motors.

5. The self-balancing human transporter as claimed in claim 1, in which the rim guide bearings (8) are plain bearings.
